# EUROPÄISCHE PATENTSCHRIFT

(11) **EP 4 070 524 B1**
(45) Veröffentlichungstag und Bekanntmachung des Hinweises auf die Patenterteilung: **30.10.2024**
(21) Anmeldenummer: 20823747.9
(22) Anmeldetag: 04.12.2020
(51) Int. Cl.: H04L 65/4061, H04L 65/1069, H04L 65/403

(54) **VERFAHREN UND VORRICHTUNG ZUR GRUPPENKOMMUNIKATION**
METHOD AND DEVICE FOR GROUP COMMUNICATION
PROCÉDÉ ET DISPOSITIF DE COMMUNICATION DE GROUPE

(30) Priorität: 06.12.2019 DE 102019219099
(43) Veröffentlichungstag der Anmeldung: 12.10.2022
(73) Patentinhaber: Continental Automotive Technologies GmbH, 30175 Hannover (DE)
(72) Erfinder: BIEGER, Stefan, 60488 Frankfurt am Main (DE); DOCHOW, Gerhard, 60488 Frankfurt am Main (DE)
(74) Vertreter: Continental Corporation
(86) Internationale Anmeldenummer: PCT/EP2020/084670
(87) Internationale Veröffentlichungsnummer: WO 2021/110931

(56) Entgegenhaltungen:
- WO-A1-2005/101689
- US-A1- 2011 009 127

## Beschreibung

Die vorliegende Erfindung betrifft ein Verfahren und eine Vorrichtung zur Gruppenkommunikation von Verkehrsteilnehmern

### Stand der Technik

Bei Push-to-talk over Cellular (PTToC, PoC oder auch verkürzt nur PTT) handelt es sich um einen Standard bei Mobiltelefonen, der eine schnelle und einfache Sprachkommunikation für Gruppen in Mobilfunknetzen beschreibt und nach dem Walkie-Talkie-Prinzip funktioniert.

Dieses Dienstangebot ermöglicht es den Kunden der Mobilfunk-Betreiber, über das Mobiltelefon mit nur einem Tastendruck eine Sprachnachricht an einen oder mehrere Empfänger zu senden. Die Mitteilung wird nicht über eine leitungsorientierte (englisch circuit switched) Mobilfunkverbindung, sondern über eine paketvermittelnde Mobilfunkverbindung (GPRS) übertragen: Die Sprachnachricht wird zunächst in Datenpakete aufgeteilt und an einen Server verschickt. Der Server leitet die Pakete an die angeschlossenen, aktiven Clients weiter (Client-Server-Modell). Dieser Vorgang erklärt, warum die Nachricht in der Regel mit einer Verzögerung (abhängig von der Empfangsstärke im Mobilfunknetz) beim Empfänger ankommt.

Die Kommunikation geschieht in der Regel im Halbduplex-Verfahren, was ein zeitgleiches Sprechen und Hören unterbindet. Sobald über einen Client gesprochen wird, können alle anderen Clients nur noch zuhören. Ein Versuch trotzdem zu sprechen, wird vom Server unterbunden. Ausnahme bilden hier die in einigen Push-To-Talk-Anwendungen integrierten Prioritätsrufe, wie Sie in Digitalfunksystemen vorkommen. Dadurch ist es möglich, Funksprüche mit niedrigerer Priorität zu unterbinden.

Die Sprachqualität ist ähnlich wie beim Digital- oder Bündel-Funk, durch die digitale Paketübertragung aber klarer und verständlicher als bei den Funk-Pendants. Weiterhin hat man bei einigen Push-To-Talk-Anbietern die Möglichkeit, Sprachnachrichten noch einmal über eine Verlaufsfunktion abzuhören.

Technisch funktioniert die Kommunikation ähnlich wie bei Voice over IP (VoIP). Die Gruppenteilnehmer bekommen zuerst eine Signalisierung durch das SIP-Protokoll, nachfolgend wird die Sprache, sogenannte "Talk Bursts", per RTP übertragen. Es gibt zwei Empfangsmodi: automatischer und manueller Empfang. Während beim automatischen Empfang die Sprachnachricht direkt aus dem Lautsprecher des Mobiltelefons ertönt, muss der Nutzer beim manuellen Empfang zunächst einen Knopf drücken, um die erste und alle nachfolgenden Sprachnachrichten zu hören.

Die WO 2005/101689 A1 offenbart, dass ein Fahrer Position und evtl. gewünschten Kommunikationsradius und/oder gewünschte Richtung, wie in Fahrtrichtung oder entgegen der Fahrtrichtung, an einen Server mitteilt. Der Server ermittelt weitere Teilnehmer in entsprechendem Gebiet sowie ihre User-ID und stellt sie auf einem Display dar, inklusive Position, Koordinaten oder Richtung. Die Darstellung erfolgt nicht auf einer Karte. Es erfolgt eine gezielte Auswahl einzelner, mehrerer oder generelle Auswahl aller Teilnehmer. Es erfolgt eine Anfrage zur Kommunikation an ausgewählte Teilnehmer und Akzeptanz oder Ablehnung der Anfrage. Beim Drücken einer Push-to-Talk-Taste wird eine Sprachnachricht an alle Mitglieder der Gruppe gesendet. Beim Loslassen der Taste wird eine Nachricht von anderen Teilnehmern empfangen. Hierzu wird eine Prioritäts-Regel bei gleichzeitigem Sprechen basierend auf Fahrzeugtyp, wie z. B. Vorrang für Einsatzfahrzeuge, aber auch bei gleichrangigen Teilnehmern, eingesetzt. Gruppenwahl kann auch standortfern erfolgen, wie z. B. Gruppe in Zielstadt oder ortsunabhängig, wie Familienmitglieder, Kollegen, Freunde auf gemeinsamer Reise. In der WO 2005/101689 A1 wird zunächst erkannt und dargestellt, ob und welche Fahrzeuge mittels einer anonymen User-ID sich im Umkreis durch eine Auswahl: nah/mittel/fern und/oder in Fahrtrichtung des Eigenfahrzeugs befinden, mit denen eine Kommunikationsgruppe gebildet werden kann. Hierzu kann der Nutzer die Auswahl einzelner/mehrerer User oder Alle vornehmen.

Durch Drücken der PTT-Taste wird die Nachricht eines Gruppenmitglieds an alle anderen Gruppenmitglieder gesendet - bei Loslassen der Taste können Nachrichten der anderen Mitglieder empfangen/gehört werden. Ein nicht genauer beschriebenes Priorisierungsschema regelt die Vergabe der Sende-Rechte bei gleichzeitigem Sende-Wunsch mehrerer Gruppenmitglieder. Neben der Gruppenbildung am aktuellen Aufenthaltsort können auch Gruppen an definierten entfernten Orten ausgewählt oder themenbezogene Gruppen (Familie, Kollegen) ohne expliziten Ortsbezug definiert werden.

Die WO 2005/101689 A1 ermöglicht dem Nutzer eine grobe Eingabe des Radius (nah/mittel/fern). Es wird aber beschrieben, dass der Server innerhalb dieser groben Vorgaben einen eigenen Suchradius bestimmt, der sich z. B. nach der Kommunikationsumgebung (z. B. Mobilfunk-Zellen) richtet oder nach Systemvorgaben, wie Aufteilung der befahrenen Strecke in Kommunikations-Abschnitte mit 1 Kilometer Länge. Das offenbarte System berücksichtigt im Nahbereich grundsätzlich den Abschnitt der Eigenposition sowie die drei davor und die drei dahinter liegenden Abschnitte. Eine Erweiterung/Einschränkung des Kommunikationsbereichs explizit in Abhängigkeit der Anzahl potenzieller Teilnehmer erfolgt dabei nicht. Aus der Schrift ist noch zu entnehmen, dass eine Liste der Mitglieder erstellbar ist, in der auch die Positions-Koordinaten bzw. die Richtung angegeben werden. Der aktuell gewählte grobe Radius (nah/mittel/fern) wird in der Überschrift der Liste angezeigt. Der Abstand zu den Mitgliedern sowie die optische Hervorhebung des aktuellen Sprechers ist hier nicht ersichtlich.

Die US 2011/009127 A1 offenbart eine Vorrichtung um einen Standort einer mobilen Kommunikationsvorrichtung und eine Bewegungsrichtung der mobilen Kommunikationsvorrichtung zu bestimmen, andere mobile Kommunikationsvorrichtungen innerhalb einer bestimmten Entfernung von der mobilen Kommunikationsvorrichtung zu identifizieren, andere mobile Kommunikationsvorrichtungen zu identifizieren, die sich in Bezug auf die mobile Kommunikationsvorrichtung in eine bestimmte Richtung bewegen, und die Vorrichtung speichert im Speicher eine Liste der identifizierten anderen mobilen Kommunikationsgeräte.

Die genannten Schriften ermöglichen die gezielte Auswahl von einzelnen Teilnehmern im definierten Umkreis, diese Auswahl dient der Gruppenbildung, erfolgt aber vor der eigentlichen Kommunikation.

Es wird beschrieben, weitere Mitglieder zu einer bestehenden Gruppe zuzufügen. Das Entfernen von Mitgliedern oder das Bilden von Untergruppen aus der bestehenden Gruppe heraus wird nicht explizit beschrieben. Auch fehlt eine explizite Beschreibung, wie man aus einer Gruppe austritt.

Die US 7,620,413 B2 beschreibt Multicast per Push-to-Talk. Es erfolgt die Vergabe eines Tokens für Sendeberechtigung via Warteschlange entweder per FIFO (wer zuerst drückt, sendet zuerst), dann die Nächste oder individuelle Priorisierung des Nutzers oder Kombination aus beiden oder weiteren Warteschlangen-Schemata. Des Weiteren wird das Erstellen, Löschen und Ändern (Zufügen/Entfernen von Mitgliedern) von Gruppenlisten erwähnt. Allerdings erfolgt diese Änderung via Website Interface und nicht explizit während des Bestehens der Gruppe.

Bekannt sind die PTT-Apps für Smartphones. Die iPTT ist eine Push-to-Talk-App und realisiert eine Walkie-Talkie-Funktionalität. Es ermöglicht eine Point-to-Multipoint-Gruppenkommunikation, Point-to-Point-Kommunikation innerhalb eines Gruppenkanals oder direkte Point-to-Point-Kommunikation mit einem einzelnen Teilnehmer. Die genannte Druckschrift beschreibt eine Rechte-Vergabe per Warteschlange. Drückt ein Sprecher seine PTT zeitlich zuerst, sendet er auch zuerst. Die später gedrückte PTT-Taste des zweiten Sprechers wird z. B. in eine FIFO-Warteschlange aufgenommen und kommt dann als nächste dran. Die Anzeige des Sprechwunsches für andere Gruppenmitglieder wird hier nicht erwähnt.

### Beschreibung und Vorteile der Erfindung

Mittels CB-Funk können Verkehrsteilnehmer miteinander kommunizieren, um sich beispielsweise vor Gefahren auf der Strecke oder vor Staus zu warnen. Über moderne Mobilfunktechniken ist eine vergleichbare Kommunikation in dieser Form bisher nicht möglich.

Bisher können Verkehrsteilnehmer ihre Mobilfunknummern austauschen oder eine Textmessenger-Gruppe bilden, um während der Fahrt miteinander in Kontakt zu treten.

Die Aufgabe der Erfindung ist es, eine prioritätsbasierte Kommunikation in einer Gruppe von Teilnehmern zu ermöglichen, die insbesondere die technischen Nachteile der PTT-Kommunikation löst.

Gelöst wird die Aufgabe durch die Angabe der technischen Lehre der unabhängigen Ansprüche 1, 5, 6, 7, 8. Die abhängigen Ansprüche 2, 3 ,4 geben vorteilhafte Ausgestaltungen an.

### Technische Vorteile der Erfindung

Die erfinderische Überlegung liegt in der Lösung der Probleme, die sich durch eine mobilfunkgestützte Gruppenkommunikation ergeben. Es wird eine spontane, lokale Gruppenkommunikation zwischen Mobilfunkteilnehmern ermöglicht, die sich zufällig oder absichtlich in der Nähe befinden und sich optional in die gleiche Richtung bewegen. Dies ist häufig mit gemeinsamen Zielen oder Interessen der Teilnehmer verbunden, was häufig mit einem natürlichem Kommunikationsbedarf mit den anderen Teilnehmern einhergeht.

Durch die tokenbasierte Spracherlaubnis wird vermieden, dass die Kommunikation von Störern absichtlich lahmgelegt wird. Durch die dynamische Radiusanpassung wird dafür gesorgt, dass die Gruppengröße immer angemessen ist. Das System kann weitgehend anonym ausgelegt werden, so dass eine Basis für eine unverbindliche Kommunikation zwischen den Teilnehmern geschaffen wird. Trotzdem sind Mechanismen vorsehbar, wie z. B. durch die Sprecherbewertung, die es absichtlichen Störern stark erschweren, das gemeinsame Gespräch zu untergraben.

Erfindungsgemäß wird vorteilhaft eine faire Regelung der Kommunikation beschrieben, damit eine Lösung der Probleme, die durch die technischen Gegebenheiten der PTT-Kommunikation auftreten, angegeben werden kann.

In Talk-Runden übernimmt ein menschlicher Moderator die regelnde Funktion - dieser hat aber die Möglichkeit der Diskussion inhaltlich zu folgen und Reaktionen der Gäste auf bestimmte Aussagen zu erkennen. Hier kann er notfalls eingreifen, den Redner unterbrechen und andere Gäste zu Wort kommen lassen. Durch die Erfindung wird diese Moderatorfunktion vorteilhaft realisiert.

### Zeichnungen

Ein Ausführungsbeispiel der Erfindung ist in der Zeichnung dargestellt und wird im Folgenden näher beschrieben. Es zeigt:

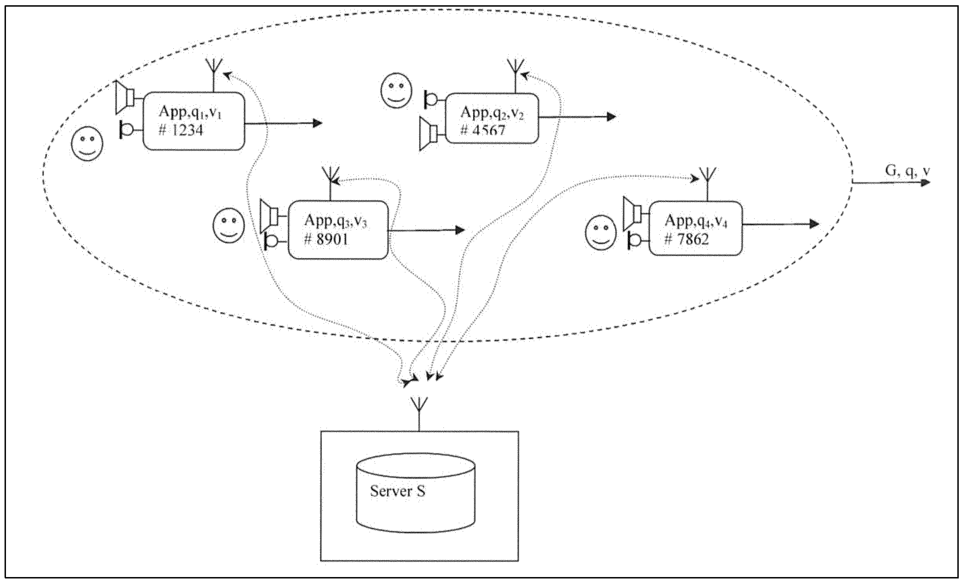

- Fig. 1: Systemarchitektur der Gruppenkommunikation.

### Beschreibung von Ausführungsbeispielen

Über ein Computerprogrammprodukt, kurz genannt App, die entweder auf einem Smartphone oder einer Headunit im Fahrzeug läuft, kann ein Verkehrsteilnehmer seine aktuelle GPS-Position q, an einen Server S melden. Der Server fasst Teilnehmer, die auch über die gleiche App verfügen und sich in einem definierbaren Gebiet um z. B. einen gedachten räumlichen Mittelpunkt eines Kreises oder um einen Brennpunkt einer Ellipse befinden, zu einer Gruppe zusammen und meldet diese Gruppendaten zurück an die Teilnehmer. Das räumliche Gebiet G kann dabei aus einem Mittelwert der räumlichen Koordinaten aller Teilnehmer ermittelt werden und sich zusätzlich mit der Durchschnittsgeschwindigkeit v und Durchschnittsrichtung der Teilnehmer bewegen. Die Gruppenbildung erfolgt z. B. inkrementell, indem zunächst versucht wird aus neuen Teilnehmern, die in Ihren Raumkoordinaten und Geschwindigkeitsvektoren am besten übereinstimmen, eine initiale Gruppe zu bilden. Ist eine Gruppe von dem Server ermittelt worden, kann auf Wunsch ein Teilnehmer die Sprecherlaubnis anfordern (Token-System). Wird diese erteilt, kann der Teilnehmer eine Sprachnachricht an alle anderen Gruppenteilnehmer senden, während die Spracheingabemöglichkeit für die anderen Teilnehmer gesperrt ist. Somit wird eine Kommunikation ähnlich dem bekannten CB-Funk auf das moderne Mobilfunknetz abgebildet. Die App oder der Server kann jeden Teilnehmer durch Vergabe einer zumindest zum Teil zufälligen Teilnehmernummer eindeutig aber anonym identifizierbar machen.

Alternativ zur Gruppenbildung über eigene Position und Fahrtrichtung können auch themengebundene Gruppen oder Gruppen an festen Orten definiert werden.

Über die Grundfunktion hinausgehend, sind folgende Erweiterungen vorgesehen:
Während einer Sprachdurchsage eines anderen Teilnehmers kann jeder andere Teilnehmer seinen Wunsch, zu allen anderen zu sprechen, einfach per Tastendruck oder per Sprachkommando mitteilen. Der Server S berücksichtigt diesen Benutzerwunsch, kann ihn auch allen Teilnehmern sofort visuell anzeigen und bei der nächsten Vergabe der Sprecherlaubnis berücksichtigen.

Der Radius für die Gruppenbildung passt sich dynamisch der Anzahl der Teilnehmer bzw. der Auslastung durch Sprecher an. So wird vermieden, dass Gruppen zu groß oder zu klein werden.

Die Position von anderen Gruppenteilnehmern kann auf einer Landkarte visualisiert werden. Ebenso der aktuelle Radius. Auf Wunsch kann der aktuelle Sprecher auf der Karte hervorgehoben werden und die Distanz zwischen Sprecher und eigenem Fahrzeug angezeigt werden.

Andere Teilnehmer 20, 30, 40 können den aktuellen Sprecher bewerten (Like/Dislike). Die Bewertung eines Sprechers hat Auswirkung auf die Erteilung der Sprecherlaubnis und die Länge der erlaubten Sprachnachricht. Wollen zwei gleich bewertete Sprecher gleichzeitig senden, bekommt jener das Token, der am längsten nicht gesprochen hat bzw. in der aktuellen Gruppe bisher weniger Sprechzeit in Anspruch genommen hat.

Ein weiteres Vergabeverfahren der Sprecherlaubnis kann sich auf die Liste der visualisierten Benutzerwünsche zum Sprechen beziehen. Alle Teilnehmer können jemanden von dieser Liste per Sprach- oder manuellem Kommando für die Vergabe der nächsten Sprecherlaubnis favorisieren, und der Server entscheidet dann zum Beispiel für denjenigen Teilnehmer, der die höchste Zustimmung für die Erteilung der Sprecherlaubnis erfahren hat.

Auch gemischte Formen der Sprecherlaubnisvergabe sind denkbar, so dass zum Beispiel die Wartezeit mit zunehmendem Gewicht bei der Vergabe einfließt.

Benutzer können sich einen Namen geben, den er seiner App per Sprach- oder manueller Eingabe mitteilt und der für die anderen Gruppenmitglieder sichtbar wird. Es können vordefinierte Gruppen erstellt werden, die nicht (nur) an einen Radius gebunden sind. Zum Beispiel Gruppen für Veranstaltungen (Fußballspiel, Konzert). Somit können Verkehrsteilnehmer mit gleichem Ziel oder gleichen Interessen miteinander kommunizieren. Teilnehmer können eigene Gruppen eröffnen, denen andere Teilnehmer beitreten können. So lassen sich privatere Kleingruppen erzeugen, die dann auch unabhängig vom Radius bestehen bleiben können. Auf Wunsch lassen sich private Gruppen mit verschlüsselter Kommunikation einrichten

Durch die tokenbasierte Spracherlaubnis wird vermieden, dass die Kommunikation von Störern absichtlich lahmgelegt wird. Durch die dynamische Radiusanpassung wird dafür gesorgt, dass die Gruppengröße immer angemessen ist.

Das System kann weitgehend anonym ausgelegt werden, so dass eine Basis für eine unverbindliche Kommunikation zwischen den Teilnehmern geschaffen wird. Trotzdem sind Mechanismen vorsehbar z. B. durch die Sprecherbewertung, die es absichtlichen Störern stark erschweren, das gemeinsame Gespräch zu untergraben.

Mittels einer Bewertung des aktuellen Sprechers ist es möglich, 'ungewollte' Sprecher einzuschränken, aber andererseits wird es vermieden, ihnen direkt die Sprecherlaubnis zu entziehen. Es sollte dabei darauf geachtet werden, dass eine demokratische 'Wahl' erfolgt und eine Einschränkung der Sprecherlaubnis über den Server S erst bei mehreren Dislikes verschiedener Verkehrsteilnehmer erfolgt, z. B. von mehr als der Hälfte der Gruppe, und nicht durch wiederholte Dislikes Einzelner ermöglicht wird. Bei Bevorzugung eines Sprechers gilt der genannte Ansatz ebenso. Des Weiteren wird bei der Vergabe der Sprecherlaubnis die Länge der Sprechzeit bzw. der Dauer seit dem letzten Sprechen über den Server S ermittelt und bei der Vergabe der Sprecherlaubnis berücksichtigt.

Es ist vorgesehen, dass über die Kommunikationsstelle zum Server S das 'Zurückziehen' eines Sprechwunsches eines Verkehrsteilnehmers eingeräumt wird, da eventuell sich inzwischen eine Frage erübrigt, oder die Diskussion ist in eine ganz andere Richtung gelaufen, oder die Lust zu diskutieren hat nachgelassen.

Erstes Ausführungsbeispiel:
Ein Fahrer fährt in einen Stau. Da er die Ursache für den Stau nicht erkennen kann, tritt er der Gruppe im aktuellen Radius bei. Ein anderer Gruppenteilnehmer befindet sich am Stauanfang und kann berichten, wie dort nach einem Unfall die Straße geräumt wird.

Da andere Teilnehmer sich ebenfalls angeregt über die Gruppe unterhalten, bekommt der Teilnehmer am Stauanfang nur noch selten die Sprechberechtigung. Da der Fahrer sich aber hauptsächlich für diesen Sprecher interessiert, stimmt er mit einem "Dislike" gegen uninteressante Sprecher und mit "Like" für den interessanten Sprecher. Daraufhin erhält der Sprecher am Stauanfang häufiger das Token für die Spracherlaubnis.

Zweites Ausführungsbeispiel:
Nach der Onlinebestellung von Konzertkarten erhält die Person eine eMail-Bestätigung. Diese enthält einen Link zur entsprechenden Gruppe der Fahrzeuge 10, 20, 30, 40. Bei der Anfahrt zum Konzert bucht er sich in diese Gruppe ein und wird mit weiteren Konzertbesuchern zusammengeschaltet, die auch gerade bei der Anreise sind. Obwohl er noch etliche Kilometer vom Ziel entfernt ist, kann er sich schon mit Gleichgesinnten austauschen und kann Kontakt mit Leuten aufnehmen, die sich auf demselben Autobahnabschnitt befinden. Spontan entsteht die Idee, im Konvoi weiterzufahren.

Drittes Ausführungsbeispiel:
Mehrere Arbeitskollegen in den Fahrzeugen 10, 20, 30, 40 haben einen gemeinsamen Termin beim Kunden. Sie fahren mit mehreren Fahrzeugen. Um während der Fahrt miteinander kommunizieren zu können, richten sie eine private Gruppe ein.

Viertes Ausführungsbeispiel:
Ein Fahrer möchte für Verkehrsteilnehmer in seiner unmittelbaren Nähe erreichbar sein. Er tritt der positionsabhängigen Gruppe bei, wählt aber manuell einen sehr kleinen Radius. Üblicherweise erhält er dadurch kaum Sprachnachrichten. Nun hört er eine Sprachmeldung von einem Verkehrsteilnehmer, der direkt hinter ihm fährt und ihn auf eine defekte Rückleuchte aufmerksam macht.

Naheliegend für einen kompletten Austritt aus der Gruppe ist ein 'Deselect All' seitens des Austretenden. Für eine Kleingruppenbildung mehrere 'Deselect' seitens der Kleingruppler zum Ausschließen der Mitglieder, die nicht in die Kleingruppe eintreten sollen mit sukzessiver Trennung der Kommunikationsverbindungen zur Restgruppe. Solange die Restmitglieder kein 'Deselect' ausführen, bleibt die ursprüngliche Verbindung zwischen ihnen bestehen.

Ebenso einfach ist ein Austreten der Kleingruppenmitglieder aus der Gruppe und eine anschließende Bildung einer neuen Gruppe.

## Patentansprüche

1. Verfahren zur Kommunikation (200) zwischen Verkehrsteilnehmern (10, 20, 30, 40), welche jeweils über mindestens eine Kommunikationsschnittstelle (a, b, c, d) zur Kommunikation mit einem Server S in Verbindung treten können, wobei bei dem Verfahren seitens des Servers zum Kommunikationsaufbau folgende Schritte durchgeführt werden:
• Übermittlung der aktuellen GPS-Position q der Verkehrsteilnehmer (10, 20, 30, 40) über ein Computerprogrammprodukt, welches auf einem Smartphone oder einer Headunit im Fahrzeug ausgeführt wird, an den Server S.
• Erfassung der Teilnehmer, welche über das gleiche Computerprogrammprodukt verfügen und sich in einem definierten Gebiet befinden, zu einer Gruppe mit Gruppendaten.
• Rückmeldung der Gruppendaten vom Server S zurück an die Verkehrsteilnehmer (10, 20, 30, 40)
• Festlegung von örtlichen und thematischen Informationen zur Bestimmung von Kommunikationsteilnehmern;
• Bestimmung einer Gruppe von Kommunikationsteilnehmern (10, 20, 30, 40) unter Zugrundelegung der örtlichen und thematischen Informationen, wobei zur örtlichen Einschränkung der Kommunikationsteilnehmer ein örtlicher Bereich definiert wird und wobei zur thematischen Einschränkung seitens des Servers zumindest ein technologischer Aspekt und/oder ein interessen-bezogener Aspekt zugrunde gelegt wird; und
• Erteilung einer Erlaubnis zur Kommunikation von Daten seitens der Verkehrsteilnehmer basierend auf einer Priorisierung durch den Server der von den Verkehrsteilnehmern übermittelten Daten an den Server, sobald die Gruppe bestimmt worden ist,
**dadurch gekennzeichnet,**
**dass** die örtlichen und thematischen Informationen aus dem Mittelwert der räumlichen Koordinaten der Verkehrsteilnehmer (10, 20, 30, 40) und der jeweiligen Durchschnittsgeschwindigkeit v und der Durchschnittsrichtung der Verkehrsteilnehmer (10, 20, 30, 40) ermittelt werden.

2. Verfahren nach Anspruch 1, **dadurch gekennzeichnet, dass** die Bestimmung einer Gruppe von Kommunikationsteilnehmern inkrementell erfolgt, wobei neue Verkehrsteilnehmer, deren räumlichen Koordinaten und deren jeweilige Durchschnittsgeschwindigkeit v und die Durchschnittsrichtung eine größte Übereinstimmung besitzen, eine initiale Gruppe von Kommunikationsteilnehmern (10, 20, 30, 40) bilden.

3. Verfahren nach Anspruch 1 oder 2, **dadurch gekennzeichnet, dass** nach einer Bestimmung der Gruppe von Kommunikationsteilnehmern (10, 20, 30, 40) durch den Server S ein Verkehrsteilnehmer (10, 20, 30, 40) eine Sprecherlaubnis anfordert und bei Erteilung der Sprechererlaubnis der jeweilige Verkehrsteilnehmer (10, 20, 30, 40) eine Sprachnachricht an die ermittelte Gruppe von den Kommunikationsteilnehmern (10, 20, 30, 40) sendet.

4. Verfahren nach einem der Ansprüche 1 bis 3, **dadurch gekennzeichnet, dass** bei Erteilung der Sprechererlaubnis für das Senden eine Sprachnachricht an die ermittelte Gruppe von den Kommunikationsteilnehmern (10, 20, 30, 40) die Spracheingabe der anderen Verkehrsteilnehmer (10, 20, 30, 40) über den Server S gesperrt wird.

5. Fahrzeugeinheit (110) umfassend eine Kommunikationseinheit zur Kommunikation in einem Fahrzeug eines Verkehrsteilnehmers (10, 20, 30, 40) zu einem Server S umfassend einem Mikroprozessor, flüchtigen und nichtflüchtigen Speicher und mindestens einer Kommunikationsschnittstelle (a, b, c, d, welche über eine oder mehrere mobile Kommunikationsleitungen kommunikativ mit dem Server S verbunden sind, wobei das System (100) dazu eingerichtet ist, das Verfahren nach einem oder mehreren der Ansprüche 1 - 4 auszuführen.

6. Computerprogrammprodukt umfassend Befehle, die bei der Ausführung des Programms durch einen Computer diesen veranlassen, das Verfahren (200) nach einem oder mehreren der Ansprüche 1 - 4 auszuführen.

7. Computerlesbareres Medium, auf dem das Computerprogrammprodukt nach Anspruch 6 gespeichert ist.

8. Fahrzeug mit einem oder mehreren Fahrzeugeinheiten (110) nach Anspruch 5.

## Claims

1. Method for communication (200) between road users (10, 20, 30, 40), which can each connect to a server S via at least one communication interface (a, b, c, d) for communication, wherein the following steps are carried out in the method by the server for the purpose of establishing communication:
• transmitting the current GPS position q of the road users (10, 20, 30, 40) to the server S via a computer program product which is executed on a smartphone or a head unit in the vehicle;
• capturing the users having the same computer program product and located in a defined area, to form a group with group data;
• feeding the group data from the server S back to the road users (10, 20, 30, 40);
• establishing local and thematic information for determining communication participants;
• determining a group of communication participants (10, 20, 30, 40) on the basis of the local and thematic information, with a local area being defined for the local restriction of the communication participants and with at least one technological aspect and/or one interest-based aspect being taken as a basis for the thematic restriction on the part of the server; and
• granting permission for the communication of data by the road users based on a prioritization by the server of the data transmitted by the road users to the server once the group has been determined,
**characterized**
**in that** the local and thematic information is determined from the average of the spatial coordinates of the road users (10, 20, 30, 40) and the respective average speed v and the average direction of the road users (10, 20, 30, 40).

2. Method according to Claim 1, **characterized in that** a group of communication participants is determined incrementally, with new road users whose spatial coordinates and respective average speed v and average direction have the greatest match forming an initial group of communication participants (10, 20, 30, 40).

3. Method according to Claim 1 or 2, **characterized in that**, after the server S has determined the group of communication participants (10, 20, 30, 40), a road user (10, 20, 30, 40) requests a permission to speak and, when the permission to speak is granted, the respective road user (10, 20, 30, 40) sends a voice message to the identified group of communication participants (10, 20, 30, 40).

4. Method according to one of Claims 1 to 3, **characterized in that**, when the permission to speak is granted for sending a voice message to the identified group of communication participants (10, 20, 30, 40), the voice input of the other road users (10, 20, 30, 40) is blocked via the server S.

5. Vehicle unit (110) comprising a communication unit for communication in a vehicle of a road user (10, 20, 30, 40) to a server S comprising a microprocessor, volatile and non-volatile memory and at least one communication interface (a, b, c, d), which are communicatively connected to the server S via one or more mobile communication lines, wherein the system (100) is configured to carry out the method according to one or more of Claims 1 - 4.

6. Computer program product comprising instructions that, when the program is executed by a computer, cause said computer to carry out the method (200) according to one or more of Claims 1 - 4.

7. Computer-readable medium on which the computer program product according to Claim 6 is stored.

8. Vehicle having one or more vehicle units (110) according to Claim 5.

## Revendications

1. Procédé de communication (200) entre des usagers de la route (10, 20, 30, 40), lesquels peuvent respectivement entrer en liaison avec un serveur S par le biais d'au moins une interface de communication (a, b, c, d) à des fins de communication, les étapes suivantes étant exécutées lors du procédé du côté du serveur pour l'établissement de la communication :
• transmission de la position GPS q actuelle des usagers de la route (10, 20, 30, 40) au serveur S par le biais d'un produit de programme informatique qui est exécuté sur un Smartphone ou un module de tête dans le véhicule,
• acquisition des usagers qui disposent du même produit de programme informatique et qui se trouvent dans une région définie, en un groupe avec des données de groupe,
• renvoi des données de groupe du serveur S aux usagers de la route (10, 20, 30, 40)
• définition d'informations locales et thématiques en vue de déterminer les participants à la communication ;
• détermination d'un groupe de participants à la communication (10, 20, 30, 40) en se basant sur les informations locales et thématiques, une zone locale étant définie pour la limitation locale des participants à la communication et au moins un aspect technologique et/ou un aspect lié aux intérêts étant pris comme base pour la limitation thématique du côté du serveur ; et
• octroi d'une autorisation de communication de données du côté des usagers de la route sur la base d'une priorisation par le serveur des données transmises par les usagers de la route au serveur, dès que le groupe a été déterminé,
**caractérisé en ce**
**que** les informations locales et thématiques sont déterminées à partir de la valeur moyenne des coordonnées spatiales des usagers de la route (10, 20, 30, 40) et de la vitesse moyenne v respective et de la direction moyenne des usagers de la route (10, 20, 30, 40).

2. Procédé selon la revendication 1, **caractérisé en ce que** la détermination d'un groupe de participants à la communication s'effectue de manière incrémentielle, de nouveaux usagers de la route dont les coordonnées spatiales et leur vitesse moyenne v respective et la direction moyenne possèdent une concordance la plus grande formant un groupe initial de participants à la communication (10, 20, 30, 40).

3. Procédé selon la revendication 1 ou 2, **caractérisé en ce qu'**après une détermination du groupe de participants à la communication (10, 20, 30, 40) par le serveur S, un usager de la route (10, 20, 30, 40) demande une autorisation de parler et, lorsque l'autorisation de parler est octroyée, l'usager de la route (10, 20, 30, 400) respectif envoie un message vocal au groupe déterminé des participants à la communication (10, 20, 30, 40).

4. Procédé selon l'une des revendications 1 à 3, **caractérisé en ce que** lors de l'octroi de l'autorisation de parler pour l'envoi d'un message vocal au groupe identifié de participants à la communication (10, 20, 30, 40), l'entrée vocale des autres usagers de la route (10, 20, 30, 40) est bloquée par le biais du serveur S.

5. Module de véhicule (110) comprenant un module de communication destiné à la communication dans un véhicule d'un usager de la route (10, 20, 30, 40) avec un serveur S, comprenant un microprocesseur, des mémoires volatile et non volatile et au moins une interface de communication (a, b, c, d), lesquels sont reliés de manière communicative au serveur S par le biais d'une ou plusieurs lignes de communication mobiles, le système (100) étant conçu pour mettre en oeuvre le procédé selon une ou plusieurs des revendications 1 à 4.

6. Produit de programme informatique comprenant des instructions qui, lorsque le programme est exécuté par un ordinateur, amènent celui-ci à mettre en oeuvre le procédé (200) selon l'une ou plusieurs des revendications 1 à 4.

7. Support lisible par ordinateur sur lequel est enregistré le produit de programme informatique selon la revendication 6.

8. Véhicule comprenant un ou plusieurs modules de véhicule (110) selon la revendication 5.
